# EUROPÄISCHE PATENTANMELDUNG

(11) **EP 0 641 745 A2**
(43) Veröffentlichungstag der Anmeldung: **08.03.1995**
(21) Anmeldenummer: 94113754.9
(22) Anmeldetag: 02.09.1994
(51) Int. Cl.: C03C 17/25

(54) **Verfahren zur Herstellung elektrisch leitfähiger, infrarotreflektierender Schichten auf Glas-, Glaskeramik- oder Emailoberflächen**

(30) Priorität: 03.09.1993 DE 4329651
(71) Anmelder: Th. Goldschmidt AG, D-45127 Essen (DE)
(72) Erfinder: Guhl, Dieter, Dr., D-45529 Hattingen (DE); Vallerien, Sven-Uwe, Dr., D-45239 Essen (DE)

(57) **Zusammenfassung**

Verfahren zur Herstellung elektrisch leitfähiger, infrarotreflektierender Schichten auf Glas-, Glaskeramik- oder Emailoberflächen durch Aufsprühen und thermische Zersetzung von flüssigen Zubereitungen, welche Sn-IV-Verbindungen und Fluorverbindungen als Dotierungsmittel enthalten, auf die auf 400 bis 800°C, jedoch unter ihren Erweichungspunkt erhitzten Oberflächen, wobei man als flüssige Zubereitungen ionisch stabilisierte organische Zinn-IV-säuresole, welche als flüssiges organisches Medium aliphatische Alkohole oder Ketone mit jeweils höchstens 6 Kohlenstoffatomen im Molekül oder Ester mit einem Siedepunkt < 180°C sowie Fluorionen in zur Dotierung ausreichender Menge enthalten, verwendet.

Die Zubereitungen sind homogen, langzeitlagerstabil und lassen sich mit Alkoholen, Ketonen, Estern und anderen polaren Lösungsmitteln gut verdünnen. Die mit den Zubereitungen auf den Substraten erzeugten Zinnoxidschichten weisen hohe Transparenz im sichtbaren Lichtwellenlängenbereich, niedrigen Oberflächenwiderstand und eine hohe Reflexion im infraroten Wellenbereich auf.

## Beschreibung

Die Erfindung betrifft ein Verfahren zur Herstellung elektrisch leitfähiger, infrarotreflektierender Schichten auf Glas-, Glaskeramik- oder Emailoberflächen durch Aufsprühen und thermische Zersetzung von flüssigen, Sn-IV-Verbindungen und Fluorverbindungen als Dotierungsmittel enthaltenden Zubereitungen auf die auf 400 bis 800°C, jedoch unter ihren Erweichungspunkt erhitzten Oberflächen.

Es ist bekannt, daß elektrisch leitfähige, mit Fluor dotierte Zinnoxidschichten auf Glasoberflächen sowohl den elektrischen Widerstand der so beschichteten Oberflächen herabsetzen als auch die Infrarotreflexion erhöhen. Zur Erzeugung derartiger Schichten werden geeignete Zinnverbindungen (Basisverbindungen) gleichzeitig mit einer Fluor abgebenden Verbindung (Dotierungsmittel) in Kontakt mit der auf 400 bis 800°C erhitzten Glasoberfläche gebracht. Die Basis-Zinnverbindung bildet eine zusammenhängende Zinnoxidschicht auf der Oberfläche des Glases, der Glaskeramik oder der Emaillierung aus. Das Fluor aus dem Dotierungsmittel erhöht die elektrische Leitfähigkeit und bewirkt die hohe Infrarotreflexion.

Das Aufsprühen geeigneter zinn- und fluorhaltiger Lösungen ist zur Aufbringung der mit Fluor dotierten Zinnoxidschichten auf den Oberflächen verfahrenstechnisch besonders einfach.

In der EP-OS 0 158 399 wird eine flüssige Zubereitung zur Herstellung hochwertiger, fluordotierter Zinnoxidschichten auf Glasoberflächen beschrieben. Die Zubereitung besteht aus
a) 1 bis 30 Gew.-% eines Dotierungsmittels auf der Basis einer organischen Fluorverbindung, ausgewählt aus Trifluoressigsäure oder deren Anhydrid, Trifluoressigsäureethylester, Trifluorethanol und Pentafluorpropionsäure, und
b) 70 bis 99 Gew.-% einer Organozinnverbindung, ausgewählt aus Alkylzinntrichlorid, Dialkylzinndichlorid, Alkyldichlorzinnacetat, Alkylchlorzinndiacetat, einem Ester des Zinnchlorids oder Zinntetrachlorid.

Dieses Verfahren kann jedoch nicht befriedigen, da die fluorhaltigen Dotierungsmittel an der heißen Glasoberfläche infolge ihres geringen Siedepunkts größtenteils wirkungslos verdampfen und somit nicht in die Zinnoxidschicht eingebaut werden. Zusätzlich wird durch diesen Effekt die heiße Oberfläche des Substrats stark abgekühlt. Dies ist für einen homogenen Schichtaufbau nachteilig und führt zu einer Verschlechterung der optischen Eigenschaften und der Funktionseigenschaften.

In der EP-PS 0 312 879 ist eine Zubereitung beschrieben, die aus Zinntetrachlorid oder Alkylzinntrichlorid mit Zinn-II-fluoroborat in einem polaren organischen Lösungsmittel besteht.

Als Dotierungsmittel wird gemäß der DE-PS 37 35 591 Zinn-II-fluorosilikat und gemäß der DE-PS 37 35 574 Zinn-II-fluorid verwendet.

Hauptnachteil dieser Zubereitungen ist jedoch der hohe Chlorgehalt. Bei der Pyrolyse bildet sich unter anderem Chlorwasserstoffgas, welches Gesundheitsgefährdungen verursachen und Materialien angreifen oder beschädigen kann.

Die Erfindung befaßt sich mit dem technischen Problem, eine Zubereitung zu finden, welche folgendes Eigenschaftsprofil aufweist:
(i) Die Zubereitung soll homogen sein und das Dotierungsmittel bereits enthalten.
(ii) Die Zubereitung soll langzeitlagerstabil sein und sich mit Alkoholen, Ketonen, Estern und anderen polaren Lösungsmitteln gut verdünnen lassen.
(iii) Der Chloridanteil der Zubereitung sollte minimiert werden.
(iv) Die mit den Zubereitungen auf den Substraten erzeugten Zinnoxidschichten sollen hohe Transparenz im sichtbaren Lichtwellenlängenbereich, einen möglichst niedrigen Oberflächenwiderstand und eine hohe Reflexion im infraroten Wellenbereich aufweisen.

Überraschenderweise erfüllt eine Zubereitung diese Anforderung, welche dadurch gekennzeichnet ist, daß man als flüssige Zubereitungen ionisch stabilisierte organische Zinn-IV-säuresole, welche als flüssiges organisches Medium aliphatische Alkohole oder Ketone mit jeweils höchstens 6 Kohlenstoffatomen im Molekül oder Ester mit einem Siedepunkt < 180°C sowie Fluorionen in zur Dotierung ausreichender Menge enthalten, verwendet.

Eine bevorzugte Verfahrensweise ist dadurch gekennzeichnet, daß man ein Zinn-IV-säuresol aufsprüht, welches durch Umsetzung einer Zinnbasisverbindung, ausgewählt aus der Gruppe Zinn-II-chlorid, Zinn- II-oxalat und Zinn-II-acetat, mit Wasserstoffperoxid in dem genannten organischen Medium erhältlich ist, wobei das Dotierungsmittel während oder nach der Bildung des Zinn-IV-säuresols zugesetzt wird.

Vorzugsweise setzt man das Dotierungsmittel bereits vor der Bildung des Sols zu. Eine weitere bevorzugte Verfahrensweise besteht deshalb darin, daß man ein Zinn-IV-säuresol aufsprüht, welches durch Umsetzung der Zinnbasisverbindung und einer Zinn-Fluorverbindung als Dotierungsmittel, ausgewählt aus der Gruppe Zinn-II-fluorid und Zinn-II-trifluoracetat, mit Wasserstoffperoxid in dem genannten organischen Medium erhältlich ist.

Eine andere Verfahrensweise besteht darin, daß man das Dotierungsmittel dem gebildeten Zinn-IV-säuresol nachträglich zusetzt und als Dotierungsmittel Flußsäure, Trifluoressigsäure oder deren Anhydrid, Zinn-II-fluorid oder Hexafluorokieselsäure verwendet.

Es ist möglich, den Zinngehalt der Zinn-IV-säuresole durch Zusatz von Alkylzinnoxiden, wobei der (die) Alkylrest(e) bis zu 6 Kohlenstoffatome aufweisen kann (können), zu erhöhen. Beispiele geeigneter Alkylzinnoxide sind Monobutylzinnoxid und Dibutylzinnoxid. Dadurch sind dann in Verdünnungen bei gleichem Zinngehalt nochmals verminderte Chloridgehalte erzielbar.

Vorzugsweise verwendet man Zinn-IV-säuresole, welche 100 bis 1200 g/l Zinn, insbesondere 200 bis 500 g/l Zinn enthalten, wobei das molare Verhältnis von Zinn zu Fluor 1 zu 0,1 bis 1 zu 0,8 beträgt.

Beispiele für das organische Medium sind:
Alkohole, wie Ethanol, Isopropanol;
Ketone, wie Aceton;
Ester, wie Butylacetat.

Die organischen Medien, bevorzugt Alkohole, werden dabei eingesetzt, um kolloidale Präzipitate zu erhalten und um ein Kristallwachstum zu unterbinden. Die Primärpartikelgröße innerhalb dieser Sole wurde mittels Transmissionselektronenmikroskopie bestimmt, sie beträgt etwa 5 nm. Die Zinn-IV-säuresollösungen sind hydrolysestabil, es bilden sich auch bei längerem Stehen keine Niederschläge.

Zur Durchführung der erfindungsgemäßen Beschichtung wird die beim erfindungsgemäßen Verfahren zu verwendende Zubereitung mittels einer mit Preßluft beaufschlagten Sprühpistole im Sprühzerstäubungsverfahren auf die zuvor erhitzten Oberflächen aufgesprüht. Das Substrat soll dabei eine Temperatur von 400 bis 800°C haben, jedoch muß die Temperatur unterhalb seiner jeweiligen Schmelz- bzw. Erweichungstemperatur liegen. Durch Pyrolyse wird auf diesen Oberflächen eine mit Fluor dotierte Zinnoxidschicht erzeugt. Die Dicke dieser Beschichtung kann zwischen 100 nm und 2 µm variiert werden. Die nach diesem Verfahren unter Verwendung der erfindungsgemäßen Zubereitungen hergestellten Schichten zeichnen sich durch eine hohe Transparenz für das sichtbare Licht aus (75 bis 88 %). Die integrale Infrarotreflexion im Wellenlängenbereich zwischen 2,5 und 15 um liegt über 80 %.

Die nachfolgenden Beispiele dienen der weiteren Erläuterung der Erfindung.

### Beispiel 1

In einen 500-ml-Mehrhalskolben, der mit einem KPG-Rührer versehen ist, wird eine Aufschlämmung von 16,5 g Zinn-II-fluorid und 113,9 g Zinn-II-chlorid in 82,8 g Ethanol vorgelegt. Unter langsamem Rühren tropft man über einen Zeitraum von 2 Stunden 34,3 g 70 %ige Wasserstoffperoxidlösung zu. Dabei sollte die Reaktionstemperatur nicht 35°C überschreiten. Man erhält eine klare Lösung. Diese wird mit Ethanol auf 50 % verdünnt und dann auf eine Flachglasscheibe (160 x 180 x 6 mm), die zuvor 5 Minuten lang bei einer Ofentemperatur von ca. 700°C aufgeheizt worden war, aufgesprüht.

Die auf diese Weise mit einer Walther-Handsprühpistole (Düsendurchmesser 1 mm, Sprühdruck 4 bar) beschichtete Glasplatte weist bei einer Sprühmenge von 7 ml und einer Sprühdauer von 5 Sekunden folgende Werte nach dem Erkalten auf:

| | |
|---|---|
| Flächenwiderstand: | 9 Ohm/Quadrat |
| IR-Reflexion: | 89 % |
| Schichtdicke: | 600 nm |

### Beispiel 2

Ethanolisches, mit Chlorid stabilisiertes Zinn-IV-säuresol mild einem Gehalt an Zinn von 497 g/l wird mit 1 Gew.-% 40 %iger Flußsäüre dotiert. Die Lösung wird dann mit Ethanol auf einen Gehalt von 45 % verdünnt.

Die damit beschichtete Flachglasscheibe zeigt nach dem Erkalten die folgenden Werte:

| | |
|---|---|
| Flächenwiderstand: | 12 Ohm/Quadrat |
| IR-Reflexion: | 84 % |
| Schichtdicke: | 800 nm |

### Beispiel 3

Es wird ethanolisches, mit Fluorid und Chlorid stabilisiertes Zinn-IV-säuresol aus Beispiel 1 verwendet, zusätzlich werden jedoch noch 29,8 g Monobutylzinnoxid (MBTO) gelöst. Diese Lösung wird dann mit Ethanol auf 37,5 % verdünnt.

Die damit beschichtete Flachglasscheibe zeigt nach dem Erkalten die folgenden Eigenschaften:

| | |
|---|---|
| Flächenwiderstand: | 9 Ohm/Quadrat |
| IR-Reflexion: | 91 % |
| Schichtdicke: | 700 nm |

### Beispiel 4

Isopropanolisches, mit Fluorid und Chlorid stabilisiertes Zinn-IV-säuresol (Molverhältnis Cl : F = 1 : 0,15) mit einem Gehalt an Zinn von 347 g/l wird unverdünnt auf eine erhitzte Flachglasscheibe aufgesprüht. Es ergeben sich die folgenden Werte:

| | |
|---|---|
| Flächenwiderstand: | 18 Ohm/Quadrat |
| IR-Reflexion: | 81 % |
| Schichtdicke: | 850 nm |

### Beispiel 5

Mit Fluorid und Chlorid stabilisiertes Zinn-IV-säuresol (Molverhältnis Cl : F = 1 : 0,2) in Aceton als Lösungsmittel mit einem Zinngehalt von 287 g/l wird unverdünnt auf eine zuvor erhitzte Flachglasscheibe aufgesprüht. Es ergeben sich die folgenden Werte:

| | |
|---|---|
| Flächenwiderstand: | 19 Ohm/Quadrat |
| IR-Reflexion: | 79 % |
| Schichtdicke: | 800 nm |

### Beispiel 6

Mit Trifluoracetat und Acetat stabilisiertes Zinn-IV-säuresol (Molverhältnis Trifluoracetat : Acetat = 0,3 : 1) in Ethanol als Lösungsmittel mit einem Zinngehalt von 312 g/l wird unverdünnt auf eine zuvor erhitzte Flachglasscheibe aufgesprüht. Es ergeben sich die folgenden Werte:

| | |
|---|---|
| Flächenwiderstand: | 31 Ohm/Quadrat |
| IR-Reflexion: | 69 % |
| Schichtdicke: | 750 nm |

## Patentansprüche

1. Verfahren zur Herstellung elektrisch leitfähiger, infrarotreflektierender Schichten auf Glas-, Glaskeramik- oder Emailoberflächen durch Aufsprühen und thermische Zersetzung von flüssigen Zubereitungen, welche Sn-IV-Verbindungen und Fluorverbindungen als Dotierungsmittel enthalten, auf die auf 400 bis 800°C, jedoch unter ihren Erweichungspunkt erhitzten Oberflächen, dadurch gekennzeichnet, daß man als flüssige Zubereitungen ionisch stabilisierte organische Zinn-IV-säuresole, welche als flüssiges organisches Medium aliphatische Alkohole oder Ketone mit jeweils höchstens 6 Kohlenstoffatomen im Molekül oder Ester mit einem Siedepunkt < 180°C sowie Fluorionen in zur Dotierung ausreichender Menge enthalten, verwendet.

2. Verfahren nach Anspruch 1, dadurch gekennzeichnet, daß man ein Zinn-IV-säuresol aufsprüht, welches durch Umsetzung einer Zinnbasisverbindung, ausgewählt aus der Gruppe Zinn-II-chlorid, Zinn-II-oxalat und Zinn-II-acetat, mit Wasserstoffperoxid in dem genannten organischen Medium erhältlich ist, wobei das Dotierungsmittel während oder nach der Bildung des Zinn-IV-säuresols zugesetzt wird.

3. Verfahren nach Anspruch 2, dadurch gekennzeichnet, daß man ein Zinn-IV-säuresol aufsprüht, welches durch Umsetzung der Zinnbasisverbindung und einer Zinn-Fluorverbindung als Dotierungsmittel, ausgewählt aus der Gruppe Zinn-II-fluorid und Zinn-II-trifluoracetat, mit Wasserstoffperoxid in dem genannten organischen Medium erhältlich ist.

4. Verfahren nach Anspruch 2, dadurch gekennzeichnet, daß man das Dotierungsmittel dem gebildeten Zinn-IV-säuresol nachträglich zusetzt und als Dotierungsmittel Zinn-II-fluorid, Flußsäure, Trifluoressigsäure oder deren Anhydrid oder Hexafluorokieselsäure verwendet.

5. Verfahren nach einem oder mehreren der vorhergehenden Ansprüche, dadurch gekennzeichnet, daß man den Zinngehalt der Zinn-IV-säuresole durch Zusatz von Alkylzinnoxiden, wobei der (die) Alkylrest(e) bis zu 6 Kohlenstoffatome aufweisen kann (können), erhöht.

6. Verfahren nach einem oder mehreren der vorhergehenden Ansprüche, dadurch gekennzeichnet, daß man ein Zinn-IV-säuresol aufsprüht, welches 100 bis 1200 g/l Zinn enthält, wobei das molare Verhältnis von Zinn zu Fluor 1 zu 0,1 bis 1 zu 0,8 beträgt.

7. Verfahren nach Anspruch 6, dadurch gekennzeichnet, daß man ein Zinn-II-säuresol mit 200 bis 500 g/l Zinn verwendet.
